# EUROPEAN PATENT APPLICATION

(11) **EP 2 637 448 A1**
(43) Date of publication of application: **11.09.2013**
(21) Application number: 11837947.8
(22) Date of filing: 28.10.2011
(51) Int. Cl.: H04W 36/14, H04W 36/28, H04W 48/18

(54) **MOBILE COMMUNICATIONS METHOD, WIRELESS ACCESS NETWORK DEVICE, AND MOBILE MANAGEMENT NODE**

(30) Priority: 04.11.2010 JP 2010247945
(71) Applicant: NTT DOCOMO, Inc., Chiyoda-ku Tokyo 100-6150 (JP)
(72) Inventor: NISHIDA, Katsutoshi, Tokyo 100-6150 (JP); AOYAGI, Kenichiro, Tokyo 100-6150 (JP); ISHII, Minami, Tokyo 100-6150 (JP); TAKAHASHI, Hideaki, Tokyo 100-6150 (JP)
(74) Representative: HOFFMANN EITLE
(86) International application number: PCT/JP2011/074961
(87) International publication number: WO 2012/060297

(57) **Abstract**

A handover method according to the present invention includes a step A of transmitting, by MME, "Reloc/HO Req" including "PS/CS HO Indication" to RNC/BSS via MSC, a step B of transmitting, by the MME, "Reloc/HO Req" including the "PS/CS HO Indication" to the RNC/BSS via SGSN, and a step C of transmitting, by the RNC/BSS, "PS to CS Resp" and "Forward Reloc Resp" to the MME after both the "Reloc/HO Req (for a CS bearer)" and the "Reloc/HO Req (for a PS bearer)" are received.

## Description

### [Technical Field]

The present invention relates to a mobile communication method, a radio access network device, and a mobile management node.

### [Background Art]

Conventionally, there has been known a mobile communication system capable of accommodating 2G/3G radio access networks (UTRAN: Universal Terrestrial Radio Access Network/GERAN: GSM EDGE Radio Access Network) and an LTE (Long Term Evolution) radio access network (E-UTRAN: Evolved Universal Terrestrial Radio Access Network).

In the mobile communication system, there has been known a technology capable of continuing voice communication of UE (User Equipment, a mobile station) #1, that is, "SRVCC (Single Radio Voice Call Continuity)", by switching the UE #1 from a state of performing voice communication using a PS (Packet Switch) bearer to a state of performing voice communication using a CS (Circuit Switch) bearer (refer to Non Patent Literature 1).Fig. 7 illustrates an operation of the "SRVCC" in the mobile communication system.

### [Citation List]

### [Non Patent Literature]

[NPL 1] 3GPP TS23.216

### [Summary of Invention]

### [Technical Problem]

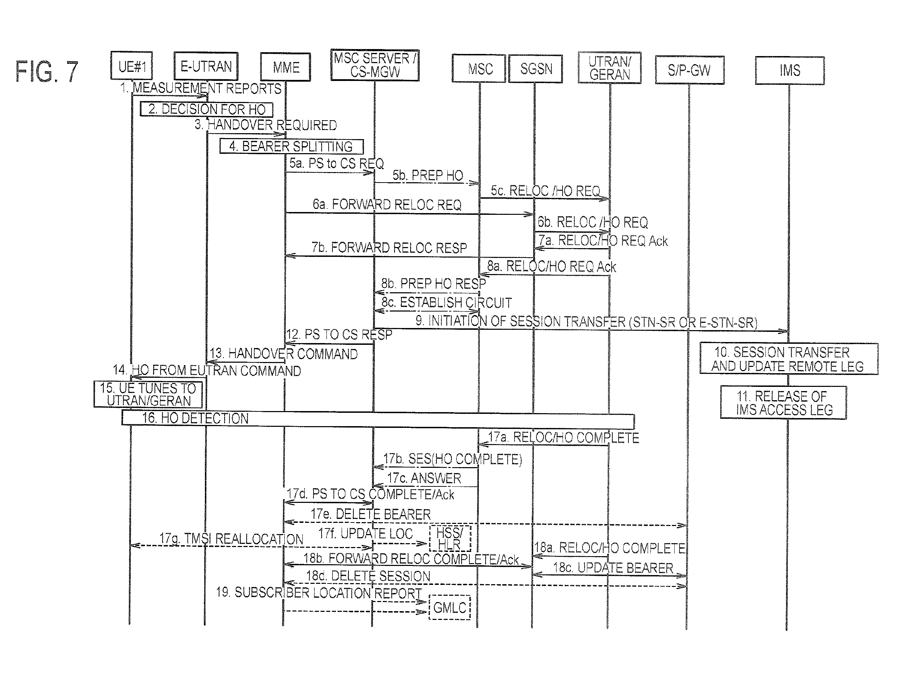

In the operation of the "SRVCC" illustrated in Fig. 7, when handover for the voice communication of the UE #1 and handover for packet communication of the UE #1 are performed, after both "Reloc/HO Req (step 5c)" for requesting to ensure a resource of a CS bearer used in the voice communication and "Reloc/HO Req (step 6b)" for requesting to ensure a resource of a PS bearer used in the packet communication are received, RNC (Radio Network Controller)/BSS (Base Station System) in UTRAN/GERAN serving as a handover destination needs to transmit "Reloc/HO Req (step 7a)" indicating that the resource of the CS bearer is ensured and "Reloc/HO Req (step 8a)" indicating that the resource of the PS bearer is ensured.

However, in the aforementioned operation of the "SRVCC", since the RNC/BSS in the UTRAN/GERAN serving as the handover destination is not able to know whether the handover for the voice communication of the UE #1 and the handover for the packet communication of the UE #1 are performed, even though the handover for the packet communication of the UE #1 is not performed, the RNC/BSS should wait for the transmission of the "Reloc/HO Req (step 7a)" and the "Reloc/HO Req (step 8a)" until both the "Reloc/HO Req (step 5c)" and the "Reloc/HO Req (step 6b)" are received.

Specifically, in the aforementioned operation of the "SRVCC", when the "Reloc/HO Req (step 5c)" related to the voice communication of the UE #1 is received, since the RNC/BSS in the UTRAN/GERAN serving as the handover destination is not able to know whether the "Reloc/HO Req (step 6b)" related to the packet communication of the UE #1 reaches, even though the handover for the packet communication of the UE #1 is not performed, the RNC/BSS should wait for the transmission of the "Reloc/HO Req (step 7a)" and the "Reloc/HO Req (step 8a)" until the "Reloc/HO Req (step 6b)" is received.

As a consequence, there is a problem that the handover for the voice communication or the packet communication may fail or handover delay may increase.

Therefore, the present invention has been achieved in view of the above-described problems, and an object thereof is to provide a mobile communication method, a radio access network device, and a mobile management node, with which it is possible to avoid failure of handover for voice communication or packet communication while avoiding an increase in handover delay in "SRVCC".

### [Solution to Problem]

A first characteristic of the present invention is summarized in that a handover method of a mobile station that performs voice communication and packet communication by using a packet switch bearer via a radio access network device of a first communication scheme not supporting circuit switching communication, comprising:
a step A of transmitting, by a mobile management node accommodating the radio access network device of the first communication scheme, a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for voice communication and packet communication;
a step B of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step C of transmitting, by the radio access network device of the second communication scheme, a response signal for the circuit switch bearer indicating that the resource of the circuit switch bearer has been ensured and a response signal for the packet switch bearer indicating that the resource of the packet switch bearer has been ensured to the mobile management node after both the resource ensuring signal for the circuit switch bearer and the resource ensuring signal for the packet switch bearer are received; and
a step D of transmitting, by the mobile management node, a handover instruction signal from the radio access network of the first communication scheme to the radio access network of the second communication scheme for the voice communication and the packet communication to the mobile station via the radio access network device of the first communication scheme when the response signal for the circuit switch bearer and the response signal for the packet switch bearer are received.

A second characteristic of the present invention is summarized in that a handover method of a mobile station that performs voice communication and packet communication by using a packet switch bearer via a radio access network device of a first communication scheme not supporting circuit switching communication, comprising:
a step A of transmitting, by a mobile management node accommodating the radio access network device of the first communication scheme, a resource ensuring signal for a circuit switch bearer for requesting to ensure a resource of a circuit switch bearer used in the voice communication to a radio access network device of a second communication scheme via a circuit switch of the second communication scheme supporting the circuit switching communication;
a step B of transmitting, by the radio access network device of the second communication scheme, a response signal for the circuit switch bearer including instruction information and indicating that the resource of the circuit switch bearer has been ensured to the mobile management node without waiting for reception of a resource ensuring signal for a packet switch bearer for requesting to ensure a resource of a packet switch bearer used in the packet communication when instruction information indicating that handover is performed for only the voice communication is included in the resource ensuring signal for the circuit switch bearer; and
a step C of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the instruction information is received.

A third characteristic of the present invention is summarized in that a handover method of a mobile station that performs voice communication and packet communication by using a packet switch bearer via a radio access network device of a first communication scheme not supporting circuit switching communication, comprising:
a step of transmitting, by a mobile management node accommodating the radio access network device of the first communication scheme, a resource ensuring signal for a circuit switch bearer for requesting to ensure a resource of a circuit switch bearer used in voice communication to a radio access network device of a second communication scheme via a circuit switch of the second communication scheme supporting the circuit switching communication, the resource ensuring signal including first instruction information indicating that handover is performed for the voice communication and the packet communication;
a step of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step of transmitting, by the packet switch of the second communication scheme, a response signal for the packet switch bearer including error response to the mobile management node without transmitting the resource ensuring signal for the packet switch bearer to the radio access network device of the second communication scheme when rejecting establishment of the packet switch bearer used in the packet communication;
a step of performing, by the mobile management node, a cancellation process for ensuring a resource of the circuit switch bearer and the packet switch bearer when the response signal for the packet switch bearer including the error response is received;
a step of transmitting, by the mobile management node, the resource ensuring signal for the circuit switch bearer to the radio access network device of the second communication scheme via the circuit switch of the second communication scheme, the resource ensuring signal including second instruction information indicating that handover is performed for only the voice communication;
a step of transmitting, by the radio access network device of the second communication scheme, a response signal for the circuit switch bearer indicating that the resource of the circuit switch bearer has been ensured to the mobile management node without waiting for reception of the resource ensuring signal for the packet switch bearer when the resource ensuring signal for the circuit switch bearer including the second instruction information is received; and
a step of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the second instruction information is received.

A fourth characteristic of the present invention is summarized in that a handover method of a mobile station that performs voice communication and packet communication by using a packet switch bearer via a radio access network device of a first communication scheme not supporting circuit switching communication, comprising:
a step of transmitting, by a mobile management node accommodating the radio access network device of the first communication scheme, a resource ensuring signal for a circuit switch bearer for requesting to ensure a resource of a circuit switch bearer used in voice communication to a radio access network device of a second communication scheme via a circuit switch of the second communication scheme supporting the circuit switching communication, the resource ensuring signal including first instruction information indicating that handover is performed for the voice communication and the packet communication;
a step of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step of performing, by the mobile management node, a cancellation process for ensuring a resource of the circuit switch bearer and the packet switch bearer when a response signal for the packet switch bearer indicating that the resource of the packet switch bearer has been ensured is not received until a predetermined period has elapsed after the resource ensuring signal for the packet switch bearer is transmitted;
a step of transmitting, by the mobile management node, the resource ensuring signal for the circuit switch bearer to the radio access network device of the second communication scheme via the circuit switch of the second communication scheme, the resource ensuring signal including second instruction information indicating that handover is performed for only the voice communication;
a step of transmitting, by the radio access network device of the second communication scheme, a response signal for the circuit switch bearer including the second instruction information and indicating that the resource of the circuit switch bearer has been ensured to the mobile management node without waiting for reception of the resource ensuring signal for the packet switch bearer when the resource ensuring signal for the circuit switch bearer including the second instruction information is received; and
a step of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the second instruction information is received.

A fifth characteristic of the present invention is summarized in that a radio access network device of a second communication scheme, which supports circuit switching communication in a mobile communication system that performs handover of a mobile station performing voice communication and packet communication by using a packet switch bearer via a radio access network device of a first communication scheme not supporting the circuit switching communication, wherein the radio access network device of the second communication scheme
receives a resource ensuing signal for a circuit switch bearer for requesting to ensure a resource of a circuit switch bearer used in the voice communication from a mobile management node accommodating the radio access network device of the first communication scheme via a circuit switch of the second communication scheme supporting the circuit switching communication,
receives a resource ensuing signal for a packet switch bearer for requesting to ensure a resource of a packet switch bearer used in the packet communication from the mobile management node via the circuit switch of the second communication scheme, and
transmits, to the mobile management node, a response signal for the circuit switch bearer indicating that the resource of the circuit switch bearer has been ensured and a response signal for the packet switch bearer indicating that the resource of the packet switch bearer has been ensured after both the resource ensuing signal for the circuit switch bearer and the resource ensuing signal for the packet switch bearer are received when first instruction information indicating that handover is performed for the voice communication and the packet communication is included in the received response signal for the circuit switch bearer or response signal for the packet switch bearer.

A sixth characteristic of the present invention is summarized in that a radio access network device of a second communication scheme, which supports circuit switching communication in a mobile communication system that performs handover of a mobile station performing voice communication and packet communication by using a packet switch bearer via a radio access network device of a first communication scheme not supporting the circuit switching communication, wherein the radio access network device of the second communication scheme
receives a resource ensuing signal for a circuit switch bearer for requesting to ensure a resource of a circuit switch bearer used in the voice communication from a mobile management node accommodating the radio access network device of the first communication scheme via a circuit switch of the second communication scheme supporting the circuit switching communication,
transmits, to the mobile management node, a response signal for the circuit switch bearer including instruction information and indicating that the resource of the circuit switch bearer has been ensured without waiting for reception of a resource ensuing signal for the packet switch bearer for requesting to ensure a resource of the packet switch bearer used in the packet communication when the instruction information indicating that handover is performed for only the voice communication is included in the received resource ensuing signal for the circuit switch bearer.

A seventh characteristic of the present invention is summarized in that a mobile management node that accommodates a radio access network device of a communication scheme in a mobile communication system that performs handover of a mobile station performing voice communication and packet communication by using a packet switch bearer via the radio access network device of the communication scheme not supporting circuit switching communication, wherein the mobile management node
transmits a resource ensuring signal for a circuit switch bearer for requesting to ensure a resource of the circuit switch bearer used in the voice communication when it is determined that handover is not performed for the packet communication even though performing handover for the voice communication and the packet communication is instructed by a handover request signal transmitted by the radio access network device, the resource ensuring signal including instruction information indicating that handover is performed for only the voice communication.

A eighth characteristic of the present invention is summarized in that a mobile management node that accommodates a radio access network device of a first communication scheme in a mobile communication system that performs handover of a mobile station performing voice communication and packet communication by using a packet switch bearer via the radio access network device of the first communication scheme not supporting circuit switching communication, wherein the mobile management node
transmits a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for the voice communication and the packet communication,
transmits a resource ensuring signal for a packet switch bearer for requesting to ensure a resource of a packet switch bearer used in the packet communication to the radio access network device of the second communication scheme via the circuit switch of the second communication scheme, the resource ensuring signal including the first instruction information, and
performs a cancellation process for ensuring a resource of the circuit switch bearer and the packet switch bearer and transmits the resource ensuring signal for the circuit switch bearer to the radio access network device of the second communication scheme via the circuit switch of the second communication scheme when a response signal for the packet switch bearer is received from the packet switch of the second communication scheme, the resource ensuring signal including second instruction information indicating that handover is performed for only the voice communication, the response signal including error response and indicating that the resource of the packet switch bearer has been ensured.

A ninth characteristic of the present invention is summarized in that a mobile management node that accommodates a radio access network device of a first communication scheme in a mobile communication system that performs handover of a mobile station performing voice communication and packet communication by using a packet switch bearer via the radio access network device of the first communication scheme not supporting circuit switching communication, wherein the mobile management node
transmits a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for the voice communication and the packet communication,
transmits a resource ensuring signal for a packet switch bearer for requesting to ensure a resource of a packet switch bearer used in the packet communication to the radio access network device of the second communication scheme via the packet switch of the second communication scheme, the resource ensuring signal including the first instruction information, and
performs a cancellation process for ensuring a resource of the circuit switch bearer and the packet switch bearer and transmits the resource ensuring signal for the circuit switch bearer to the radio access network device of the second communication scheme via the circuit switch of the second communication scheme when a response signal for the packet switch bearer is not received until a predetermined period has elapsed after the resource ensuring signal for the packet switch bearer is transmitted, the resource ensuring signal including second instruction information indicating that handover is performed for only the voice communication, the response signal indicating that the resource of the packet switch bearer has been ensured.

A tenth characteristic of the present invention is summarized in that a packet switch, which accommodates a radio access network device of a communication scheme in a mobile communication system that performs handover of a mobile station performing voice communication and packet communication by using a packet switch bearer via the radio access network device of the communication scheme supporting circuit switching communication, wherein the mobile management node
transmits a resource ensuring signal for a circuit switch bearer for requesting to ensure a resource of the circuit switch bearer used in the voice communication when it is determined that handover is not performed for the packet communication even though performing handover for the voice communication and the packet communication is instructed by a handover request signal transmitted by the radio access network device, the resource ensuring signal including instruction information indicating that handover is performed for only the voice communication.

### [Advantageous Effects of Invention]

As described above, according to the present invention, it is possible to provide a mobile communication method, a radio access network device, and a mobile management node, by which it is possible to avoid failure of handover for voice communication or packet communication while avoiding an increase in handover delay in "SRVCC".

### [Brief Description of Drawings]

[Fig. 1] Fig. 1 is a diagram showing the entire configuration of a mobile communication system according to a first embodiment of the present invention.
[Fig. 2] Fig. 2 is a sequence diagram showing an operation of the mobile communication system according to the first embodiment of the present invention.
[Fig. 3] Fig. 3 is a sequence diagram showing the operation of the mobile communication system according to the first embodiment of the present invention.
[Fig. 4] Fig. 4 is a sequence diagram showing the operation of the mobile communication system according to the first embodiment of the present invention.
[Fig. 5] Fig. 5 is a sequence diagram showing an operation of the mobile communication system according to the first embodiment of the present invention.
[Fig. 6] Fig. 6 is a sequence diagram showing operations of a mobile communication system according to a first modification of the present invention.
[Fig. 7] Fig. 7 is a sequence diagram showing an operation of a conventional mobile communication system.

### [Description of Embodiments]

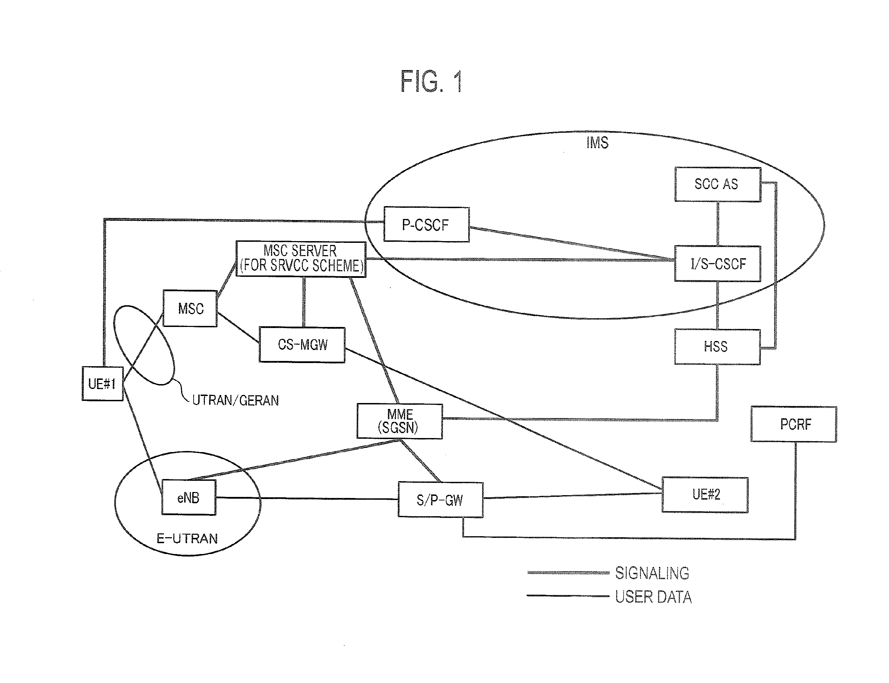

(Mobile communication system according to first embodiment of the present invention)
A mobile communication system according to a first embodiment of the present invention is described with reference to Fig. 1 through Fig. 5.

As illustrated in Fig. 1, the mobile communication system according to the present embodiment includes EPS (Evolved Packet System) including E-UTRAN and a mobile transmission network, a 2G/3G system including GERAN/UTRAN and a core network, and IMS (IP Multimedia Subsystem, a service control network).

In the E-UTRAN, eNB (a radio access network device) is provided, and in the GERAN/UTRAN, RNC/BSS (a radio access network device) is provided.

In the mobile transmission network, MME (Mobility Management Entity, a mobile management node), S-GW (Serving-Gateway, a serving gateway device), P-GW (PDN-Gateway, a packet data network gateway device), PCRF (Policy and Charging Rules Function, a policy control device), and HSS (Home Subscriber Server, a subscriber management server)/HLR (Home Location Register) (not illustrated) are provided.

In the 2G/3G core network, MSC (Mobile-service Switching Center, a circuit switch), SGSN (Serving GPRS Support Node, a packet switch), an MSC server for an SRVCC scheme, and CS-MGW (Corcuit Switch-Media Gateway, a media gateway device for circuit switching) are provided.

In the IMS, SCC AS (Service Centralization and Continuity Application Server), I/S-CSCF (Interrogating/Serving Call Session Control Function), P-CSCF (Proxy Call Session Control Function) and the like are provided.

Furthermore, the mobile communication system according to the present embodiment is configured to be capable of switching UE #1 from a state of performing voice communication using a PS bearer via the E-UTRAN and the mobile transmission network to a state of performing voice communication using a CS bearer via the UTRAN/GERAN and the core network, that is, to perform handover for the voice communication of the UE #1, thereby achieving "SRVCC".

Furthermore, the mobile communication system according to the present embodiment is configured to be capable of performing handover for packet communication of the UE #1 as well as the handover for the voice communication of the UE #1.

That is, the mobile communication system according to the present embodiment is configured to be capable of switching, in the operation of "SRVCC", the UE #1, from a state of performing packet communication using the PS bearer via the E-UTRAN and the mobile transmission network to a state of performing packet communication using the PS bearer via the UTRAN/GERAN and the core network.

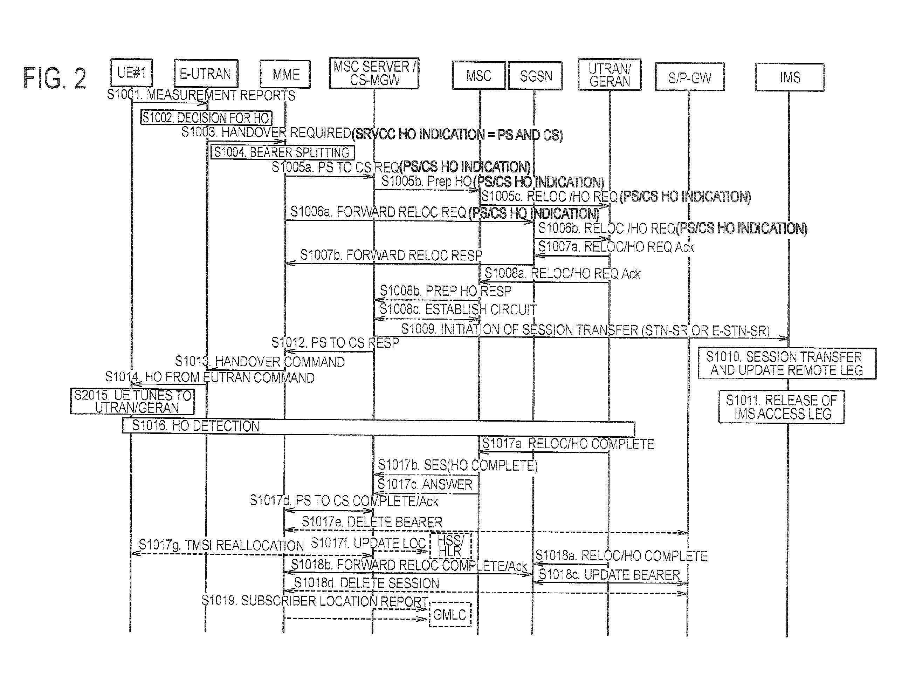

A detailed operation of the mobile communication system according to the present embodiment is described with reference to Fig. 2 through Fig. 5, below.

Furthermore, it is assumed that the UE #1 is in a state of performing voice communication and packet communication using the PS bearer via the E-UTRAN and the mobile transmission network.

Firstly, with reference to Fig. 2, a description will be provided for an operation when handover for the voice communication of the UE #1 and handover for the packet communication of the UE #1 are performed in the mobile communication system according to the present embodiment.

As illustrated in Fig. 2, in step S1001, the UE #1 transmits "Measurement Report" to the eNB in the E-UTRAN.

In step S1002, the eNB determines to switch a connection destination radio access network of the UE #1 from the E-UTRAN to the UTRAN/GERAN, that is, to perform handover to the UTRAN/GERAN from the E-UTRAN for the voice communication and the packet communication of the UE #1.

In step S1003, the eNB transmits, to the MME, "Handover Required" including "SRVCC HO Indication = PS and CS" instructing the handover for the voice communication and the packet communication of the UE #1.

In step S1004, the MME performs "Bearer Splitting", that is, splits a PS bearer used in the voice communication of the UE #1 and a PS bearer used in the packet communication of the UE #1.

In step S1005a, the MME transmits, to the MSC server/the CS-MGW, "PS to CS Req" including "PS/CS HO Indication" indicating that the handover is performed for the voice communication and the packet communication of the UE #1.

In step S1005b, the MSC server/the CS-MGW transmits "Prep HO" including the "PS/CS HO Indication" to the MSC, and in step S1005c, the MSC transmits "Reloc/HO Req" including the "PS/CS HO Indication" to the RNC/BSS in the UTRAN/GERAN.

Furthermore, the "PS to CS Req (step S1005a)", the "Prep HO (step S1005b)", and the "Reloc/HO Req (step S1005c, for a CS bearer)" are resource ensuring signals for a CS bearer for requesting to ensure a resource of the CS bearer used in the voice communication of the UE #1.

Furthermore, in step S1006a, the MME transmits "Forward Reloc Req" including the aforementioned "PS/CS HO Indication" to the SGSN, and in step S1006b, the SGSN transmits "Reloc/HO Req" including the aforementioned "PS/CS HO Indication" to the RNC/BSS.

Furthermore, the "Forward Reloc Req (step S1006a)" and the Reloc/HO Req (step S1006b, for a PS bearer)" are resource ensuring signals for a PS bearer for requesting to ensure a resource of the PS bearer used in the packet communication of the UE #1.

In addition, in step S1006a, context (Context) for a PS bearer, other than the PS bearer used in the voice communication of the UE #1, is notified from the MME to the SGSN.

Furthermore, when the "PS/CS HO Indication" is included in the previously received "Reloc/HO Req (for a CS bearer)", the RNC/BSS activates a waiting timer, and when the "Reloc/HO Req (for a PS bearer)" is received before the waiting timer expires, the RNC/BSS transmits "Reloc/HO Req Ack (for the PS bearer)" to the SGSN in step S1007a and transmits "Reloc/HO Req Ack (for the CS bearer)" to the MSC in step S1008a.

Similarly, when the "PS/CS HO Indication" is included in the previously received "Reloc/HO Req (for the PS bearer)", the RNC/BSS activates the waiting timer, and when the "Reloc/HO Req (for the CS bearer)" is received before the waiting timer expires, the RNC/BSS transmits the "Reloc/HO Req Ack (for the PS bearer)" to the SGSN in step S1007a and transmits the "Reloc/HO Req Ack (for the CS bearer)" to the MSC in step S1008a.

Alternatively, the RNC/BSS may activate the waiting timer and perform the aforementioned waiting process in response to "SRVCC Information" in "Transparent Container" set in the "Reloc/HO Req (for the PS bearer)".

Furthermore, when the "PS/CS HO Indication" is included in the previously received "Reloc/HO Req (for the CS bearer)", the RNC/BSS activates the waiting timer, and when the "Reloc/HO Req (for the PS bearer)" is not received before the waiting timer expires, the RNC/BSS may transmit the "Reloc/HO Req Ack (for the CS bearer)" including "Prepared CS only" to the MSC in step S1008a, the "Prepared CS only" indicating that handover is performed for only the voice communication of the UE #1.

In such a case, it is assumed that the "Prepared CS only" is also set in "Prep HO Resp (step S1008b)" and "PS to CS Resp (step S 1012)" which will be described later.

In step S1007b, the SGSN transmits "Forward Reloc Resp" to the MME.

In addition, when the "Reloc/HO Req (for the PS bearer)" is received after the waiting timer expires, the RNC/BSS may notify the SGSN of error information in step S1007a. In such a case, in step S1007b, the SGSN notifies the MME of predetermined error information.

In step S1008b, the MSC transmits the "Prep HO Resp" to the MSC server/the CS-MGW, and in step S1008c, a circuit is established between the MSC server/the CS-MGW and the MSC.

In step S1009, the MSC server/the CS-MGW transmits "Initiation of Session Transfer (STN-SR or E-STN-SR)" to the SCC AS in the IMS, and in steps S1010 and S1011, the SCC AS performs the process illustrated in Fig. 2.

In step S1012, the MSC server/the CS-MGW transmits the "PS to CS Resp" to the MME.

Furthermore, the "Reloc/HO Req Ack (step S1007a, for the PS bearer)" and the "Forward Reloc Resp (step S1007b)" are response signals for the PS bearer, which indicate that the resource of the PS bearer used in the packet communication of the UE #1 is ensured.

Furthermore, the "Reloc/HO Req Ack (step S1008a, for the CS bearer)", the "Prep HO Resp (step S1008b)", and the "PS to CS Resp (step S1012)" are response signals for the CS bearer, which indicate that the resource of the CS bearer used in the voice communication of the UE #1 is ensured.

After the "PS to CS Resp (step S1012)" and the "Forward Reloc Resp (step S1007b)" are received, the MME transmits, to the eNB, "Handover Command" instructing handover to the UTRAN/GERAN from the E-UTRAN for the voice communication and the packet communication of the UE #1 in step S1013.

In addition, when the "PS to CS Resp" including the "Prepared CS only" is received in step S1012, the MME may transmit the "Handover Command" to the eNB without waiting for the reception of the "Forward Reloc Resp (step S1007b)".

Alternatively, when the predetermined error information is received in step S1007b, the MME may also transmit the "Handover Command" to the eNB without waiting for the reception of the "Forward Reloc Resp (step S1007b)".

In step S1014, the eNB transmits, to the UE #1, an "HO from EUTRAN command" instructing the handover to the UTRAN/GERAN from the E-UTRAN for the voice communication and the packet communication of the UE #1.

In step S1015, the UE #1 switches a connection destination radio access network from the E-UTRAN to the UTRAN/GERAN.

In step S1016, in the eNB, the RNC/BSS and the like, a process of switching the connection destination radio access network of the UE #1 from the E-UTRAN to the UTRAN/GERAN, is performed.

In step S1017a, the RNC/BSS transmits "Reloc/HO Complete" to the MSC, and the MSC transmits "SES (HO Complete)" to the MSC server/CS-MGW in step S1017b and transmits "ANSWER" to the MSC server/CS-MGW in step S1017c.

In step S1017d, transmission/reception of "PS to CS Complete/Ack" is performed between the MSC server/CS-MGW and the MME.

In step S1017e, "Delete bearer" is performed, and in step S1017f, the MSC server/CS-MGW transmits "UpdateLoc" to the HSS/HLR.

In step S1017g, "TMSI Reallocation" is performed between the UE #1 and the MSC server/CS-MGW.

In step S1018a, the RNC/BSS transmits "Reloc/HO complete" to the SGSN, and in step S1018b, transmission/reception of "Forward Reloc Complete/Ack" is performed between the MME and the SGSN. In step S1018c, "Update bearer" is performed between the SGSN and the S/P-GW, and in step S1018d, "Delete Session" is performed.

In steps S1018a to S1018d, a switching process for a PS bearer, other than the PS bearer used in the voice communication of the UE #1, is performed. In addition, by such a procedure, the MME transmits "Release Resource" to the eNB (not illustrated), thereby releasing all PS bearers including the PS bearer held in the eNB and used in the voice communication of the UE #1. Furthermore, steps S1018a to S1018d are not performed when it is determined in the aforementioned process that the switching for the PS bearer is not performed.

In step S1019, the MME and the MSC server/CS-MGW transmit "Subscriber Location Report" to GMLC.

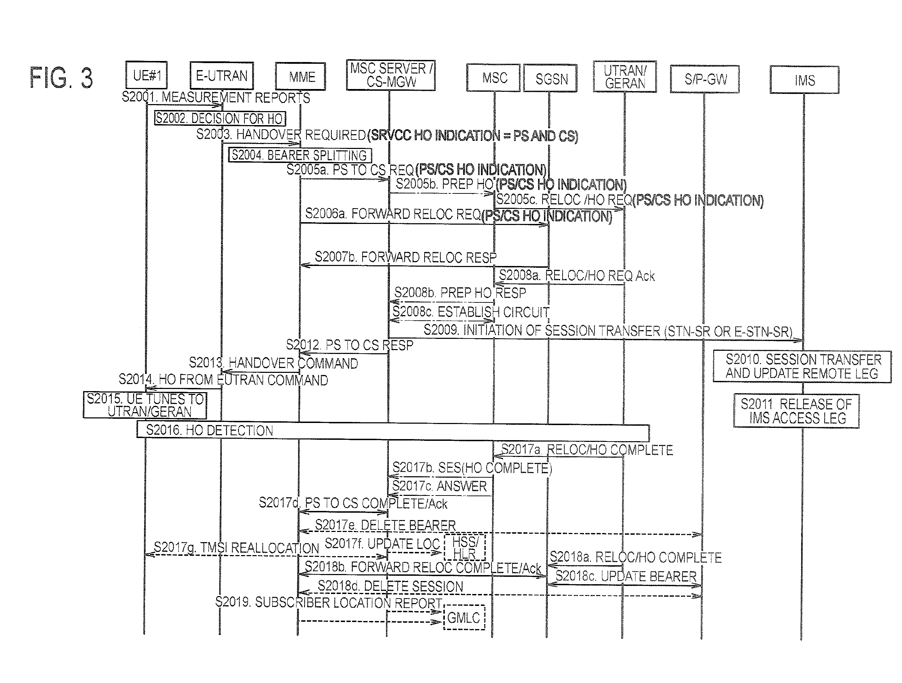

Secondly, with reference to Fig. 3, a description will be provided for an operation when the SGSN rejects the handover for the packet communication of the UE #1 in the mobile communication system according to the present embodiment.

As illustrated in Fig. 3, operations of steps S2001, S2002, S2003, S2004, S2005a, S2005b, and S2005c are equal to the operations of steps S1001, S1002, S1003, S1004, S1005a, S1005b, and S1005c illustrated in Fig. 2, respectively.

When the "Forward Reloc Req" including the "PS/CS HO Indication" is received from the MME in step S2006a, if the SGSN rejects the handover for the packet communication of the UE #1, that is, if the SGSN rejects the establishment of the PS bearer to be used in the packet communication of the UE #1, the SGSN does not transmit the "Reloc/HO Req" including the aforementioned "PS/CS HO Indication" to the RNC/BSS, and transmits "Forward Reloc Resp" to the MME in step S2007b.

Furthermore, since the "PS/CS HO Indication" is included in the "Reloc/HO Req (for the CS bearer)" received in step S2005c, the RNC/BSS activates the waiting timer. Before the waiting timer expires, since the "Reloc/HO Req (for the PS bearer)" is not received, the RNC/BSS transmits the "Reloc/HO Req Ack (for the CS bearer)" including the "Prepared CS only" to the MSC in step S2008a.

In addition, when rejecting the establishment of the PS bearer to be used in the packet communication of the UE #1, the SGSN may notify the RNC/BSS of PS handover failure, and the RNC/BSS may stop the waiting timer by such a signal, and transmit the "Reloc/HO Req Ack (for the CS bearer)" including the "Prepared CS only" to the MSC in step S2008a.

Operations of steps S2008b, S2008c, S2009, S2010, S2011, S2012, S2013, S2014, S2015, S2016, S2017a, S2017b, S2017c, S2017d, S2017e, S2017f, S2017g, S2018a, S2018b, S2018c, S2018d, and S2019 are equal to the operations of steps S1008b, S1008c, S1009, S1010, S1011, S1012, S1013, S1014, S1015, S1016, S1017a, S1017b, S1017c, S1017d, S1017e, S1017f, S1017g, S1018a, S1018b, S1018c, S1018d, and S1019 illustrated in Fig. 2, respectively.

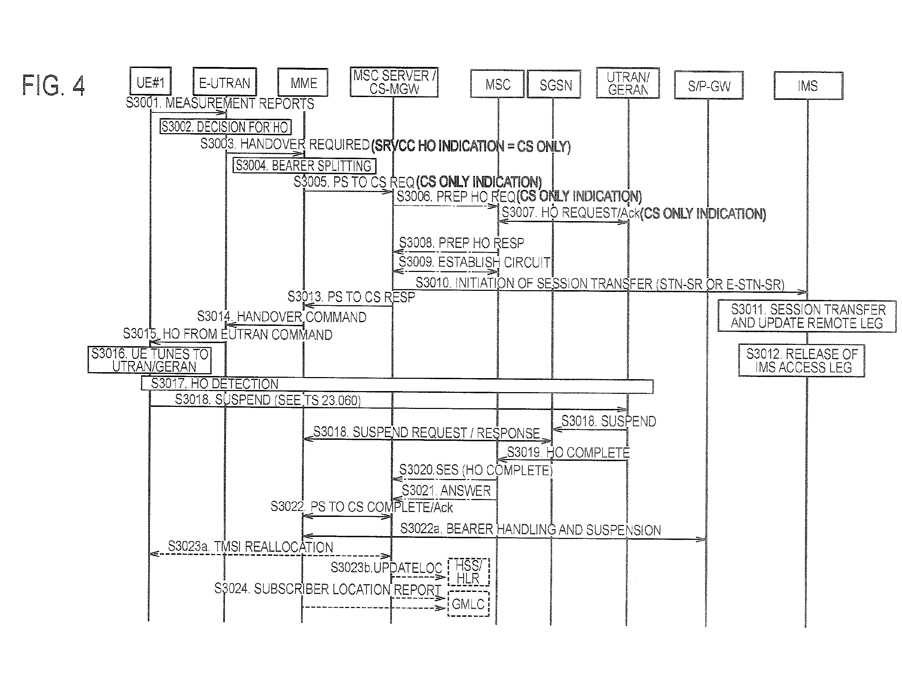

Thirdly, with reference to Fig. 4, a description will be provided for an operation when the handover for only the voice communication of the UE #1 is performed in the mobile communication system according to the present embodiment.

As illustrated in Fig. 4, in step S3001, the UE #1 transmits "Measurement Report" to the eNB in the E-UTRAN.

In step S3002, the eNB determines to perform the handover to the UTRAN/GERAN from the E-UTRAN for only the voice communication of the UE #1 (that is, not to perform the handover to the UTRAN/GERAN from the E-UTRAN for the packet communication of the UE#1).

In step S3003, the eNB transmits, to the MME, "Handover Required" including "SRVCC HO Indication = CS Only" instructing the handover for only the voice communication of the UE #1.

In step S3004, the MME performs "Bearer Splitting", that is, splits a PS bearer used in the voice communication of the UE #1 and a PS bearer used in the packet communication of the UE #1.

In step S3005, the MME transmits, to the MSC server/the CS-MGW, "PS to CS Req" including "CS Only Indication" indicating that the handover is performed for only the voice communication of the UE#1.

In step S3006, the MSC server/the CS-MGW transmits "Prep HO Req" including the "CS Only Indication" to the MSC.

In step S3007, the MSC transmits "HO Request" including the "CS Only Indication" to the RNC/BSS.

When the "CS Only Indication" is included in the received "HO Request (for a CS bearer)", the RNC/BSS does not activate the waiting timer, that is, does not wait for the reception of "HO Request (for a PS bearer)", and transmits "HO Request Ack (for the CS bearer)" including "Prepared CS only" to the MSC.

In addition, the "Prepared CS only" may not be set. When the "Prepared CS only" has been set, the "Prepared CS only" may be notified up to the MME in steps S3008 and S3013.

In step S3008, the MSC transmits "Prep HO Resp" to the MSC server/the CS-MGW, and in step S3009, a circuit is established between the MSC server/the CS-MGW and the MSC.

In step S3010, the MSC server/the CS-MGW transmits "Initiation of Session Transfer (STN-SR or E-STN-SR)" to the SCC AS in the IMS, and in steps S3011 and S3012, the SCC AS performs the process illustrated in Fig. 4.

In step S3013, the MSC server/the CS-MGW transmits "PS to CS Resp" including the "Prepared CS only" to the MME.

After the "PS to CS Resp (step S3013)" is received, the MME transmits, to the eNB, "Handover Command" instructing handover to the UTRAN/GERAN from the E-UTRAN for only the voice communication of the UE #1 in step S3014.

In step S3015, the eNB transmits, to the UE #1, "HO from EUTRAN command" instructing the handover to the UTRAN/GERAN from the E-UTRAN for only the voice communication of the UE #1.

In step S3016, the UE #1 switches a connection destination radio access network from the E-UTRAN to the UTRAN/GERAN.

In step S3017, in the eNB, the RNC/BSS and the like, a process of switching the connection destination radio access network of the UE #1 from the E-UTRAN to the UTRAN/GERAN, is performed.

In step S3018, the UE #1 transmits "Suspend (refer to 3GPP TS23.060)" to the RNC/BSS, and in step S3018, the RNC/BSS transmits the "Suspend" to the SGSN, the SGSN transmits "Suspend Request" to the MME, and the MME transmits "Suspend Response" to the SGSN.

In step S3019, the RNC/BSS transmits "HO Complete" to the MSC, and the MSC transmits "SES (HO Complete)" to the MSC server/CS-MGW in step S3020 and transmits "ANSWER" to the MSC server/CS-MGW in step S3021.

In step S3022, transmission/reception of "PS to CS Complete/Ack" is performed between the MSC server/CS-MGW and the MME.

In step S3022a, "Bearer handling and suspension" is performed between the MME and the S/P-GW, and in step S3023a, "TMSI Reallocation" is performed between the UE #1 and the MSC server/CS-MGW.

In step S3023b, the MSC server/CS-MGW transmits "UpdateLoc" to the HSS/HLR, and in step S3024, the MME and the MSC server/CS-MGW transmits "Subscriber Location Report" to the GMLC.

In addition, in the mobile communication system according to the present embodiment, when the E-UTRAN is switched to the UTRAN/GERAN supporting a DTM (Dual Transfer Mode) function, step S3018 may not be performed, and an operation for cutting only the PS bearer used in the voice communication may be performed in step S3022a. In such a case, after the E-UTRAN is switched to the UTRAN/GERAN, the UE #1 may perform a "Routing Area Update" process to restart communication.

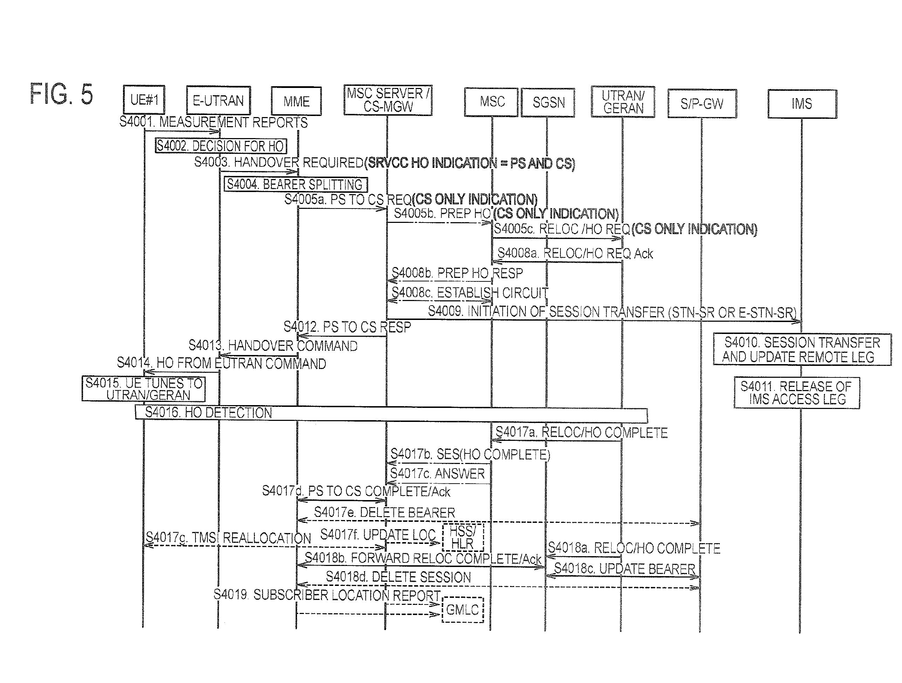

Fourthly, with reference to Fig. 5, a description will be provided for an operation when the MME determines not to perform the handover for the packet communication of the UE #1 in the mobile communication system according to the present embodiment.

As illustrated in Fig. 5, in step S4001, the UE #1 transmits "Measurement Report" to the eNB in the E-UTRAN.

In step S4002, the eNB determines to switch a connection destination radio access network of the UE #1 from the E-UTRAN to the UTRAN/GERAN, that is, to perform handover to the UTRAN/GERAN from the E-UTRAN for the voice communication and the packet communication of the UE #1.

In step 54003, the eNB transmits, to the MME, "Handover Required" including "SRVCC HO Indication = PS and CS" instructing the handover for the voice communication and the packet communication of the UE #1.

In step S4004, the MME performs "Bearer Splitting", that is, splits a PS bearer used in the voice communication of the UE #1 and a PS bearer used in the packet communication of the UE #1.

Furthermore, the MME determines not to perform the handover for the packet communication of the UE #1.

In step S4005a, the MME transmits, to the MSC server/the CS-MGW, "PS to CS Req" including "CS Only Indication" indicating that the handover is performed for only the voice communication of the UE#1.

In step S4005b, the MSC server/the CS-MGW transmits "Prep HO" including the "CS Only Indication" to the MSC, and in step S4005c, the MSC transmits "Reloc/HO Req" including the "CS Only Indication" to the RNC/BSS in the UTRAN/GERAN.

Furthermore, since the "CS Only Indication" is included in the received "Reloc/HO Req (for a CS bearer)", the RNC/BSS does not activate the waiting timer, that is, does not wait for the reception of "Reloc/HO Req (for a PS bearer)", and transmits "Reloc/HO Req Ack (for the CS bearer)" including "Prepared CS only" to the MSC in step 54008a.

In step S4008b, the MSC transmits "Prep HO Resp" including the "Prepared CS only" to the MSC server/the CS-MGW, and in step 54008c, a circuit is established between the MSC server/the CS-MGW and the MSC.

In step S4009, the MSC server/the CS-MGW transmits "Initiation of Session Transfer (STN-SR or E-STN-SR)" to the SCC AS in the IMS, and in steps S4010 and 54011, the SCC AS performs the process illustrated in Fig. 5.

In step S4012, the MSC server/the CS-MGW transmits "PS to CS Resp" including the "Prepared CS only" to the MME.

When the "PS to CS Resp" including the "Prepared CS only" is received, the MME transmits, to the eNB, "Handover Command" instructing handover to the UTRAN/GERAN from the E-UTRAN for only the voice communication of the UE #1 in step S4013.

In addition, in steps S4008a, S4008b, and S4012, the "Prepared CS only" may not be set. In such a case, when the "PS to CS Resp" is received, the MME transmits, to the eNB, the "Handover Command" instructing handover to the UTRAN/GERAN from the E-UTRAN for only the voice communication of the UE #1 in step S4013.

Operations of steps S4014, S4015, S4016, S4017a, S4017b, S4017c, S4017d, S4017e, S4017f, S4017g, S4018a, S4018b, S4018c, S4018d, and S4019 are equal to the operations of steps S1014, S1015, S1016, S1017a, S1017b, S1017c, S1017d, S1017e, S1017f, S1017g, S1018a, S1018b, S1018c, S1018d, and S1019 illustrated in Fig. 2, respectively.

In accordance with the mobile communication system according to the present embodiment, in the operation of the "SRVCC", the RNC/BSS is able to know whether to perform the handover for the packet communication of the UE #1 as well as the handover for the voice communication of the UE #1 by the "PS/CS HO Indication" or the "CS Only Indication" included in the received "Reloc/HO Req".

Consequently, in accordance with the mobile communication system according to the present embodiment, in the operation of the "SRVCC", when the handover for the packet communication of the UE #1 is not performed, it is not necessary to wait for the transmission of the "Reloc/HO Req (for the CS bearer)" and the "Reloc/HO Req (for the PS bearer)" until both the "Reloc/HO Req (for the CS bearer)" and the "Reloc/HO Req (for the PS bearer)" are received, so that it is possible to avoid failure of the handover for the voice communication or the packet communication of the UE #1 while avoiding an increase in the handover delay.

### (First modification)

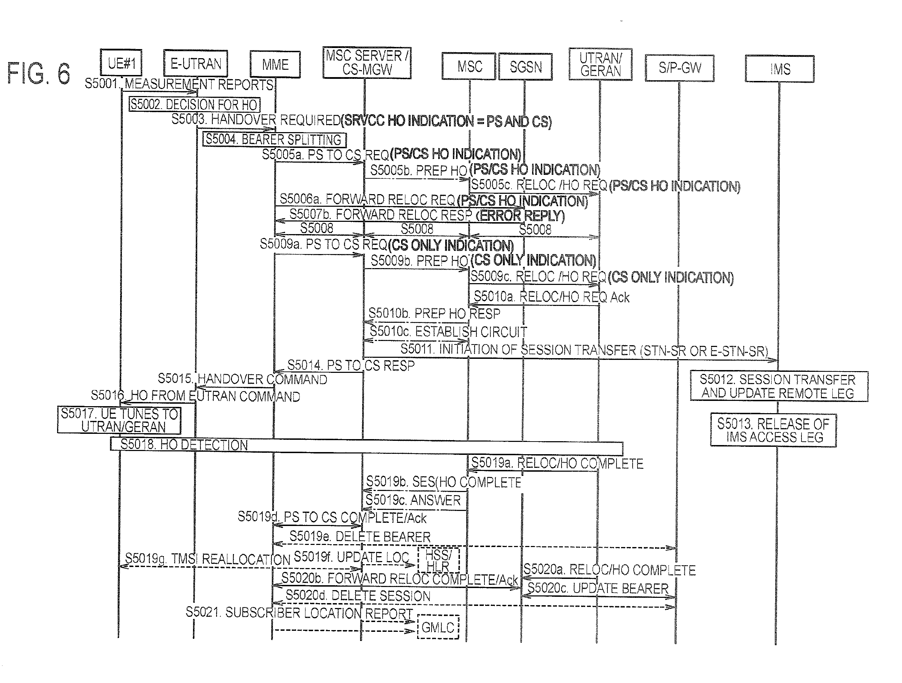

A mobile communication system according to a first modification of the present invention is described with reference to Fig. 6. The following is a description of the mobile communication system according to the first modification while focusing on the difference from the mobile communication system according to the first embodiment described above.

As illustrated in Fig. 6, operations of steps S5001, S5002, S5003, S5004, S5005a, S5005b, and S5005c are equal to the operations of steps S1001, S1002, S1003, S1004, S1005a, S1005b, and S1005c illustrated in Fig. 2, respectively.

When the "Forward Reloc Req" including "PS/CS HO Indication" is received from the MME in step S5006a, if the SGSN rejects the handover for the packet communication of the UE #1, that is, if the SGSN rejects the establishment of the PS bearer to be used in the packet communication of the UE #1, the SGSN does not transmit "Reloc/HO Req" including the aforementioned "PS/CS HO Indication" to the RNC/BSS, and transmits "Forward Reloc Resp" including error response to the MME in step S5007b.

When the "Forward Reloc Resp" including the error response is received, the MME performs a cancellation process for ensuring a resource of the aforementioned CS bearer in step S5008.

Furthermore, when "Reloc/HO Req (for the PS bearer)" is transmitted in step S5006a, the MME may activate a timer for counting a predetermined period. When the "Forward Reloc Resp" is not received until the timer expires, the MME may perform a cancellation process for ensuring a resource the aforementioned CS bearer and PS bearer.

In step S5009a, the MME transmits, to the MSC server/the CS-MGW, "PS to CS Req" including "CS Only Indication" indicating that the handover is performed for only the voice communication of the UE#1.

In step S5009b, the MSC server/the CS-MGW transmits "Prep HO" including the "CS Only Indication" to the MSC, and in step S5009c, the MSC transmits "Reloc/HO Req" including the "CS Only Indication" to the RNC/BSS.

Operations of steps S5010a, S5010b, S5010c, S5011, S5012, S5013, S5014, S5015, S5016, S5017, S5018, S5019a, S5019b, S5019c, S5019d, S5019e,S5019f, S5019g, S5020a, S5020b, S5020c, S5020d, and S5021 are equal to the operations of steps S4008a, S4008b, S4008c, S4009, S4010, S4011, S4012, S4013, S4014, S4015, S4016, S4017a, S4017b, S4017c, S4017d, S4017e, S4017f, S4017g, S4018a, S4018b, S4018c, S4018d, and S4019 illustrated in Fig. 5, respectively.

### (Second modification)

In addition, the mobile communication system according to the aforementioned first embodiment and first modification may be configured to switch the UE #1 from a state of performing voice communication using a PS bearer via the E-UTRAN and the mobile transmission network to a state of performing voice communication using a CS bearer via the UTRAN/GERAN and the core network, by using an "improved SRVCC scheme" defined in "3GPP TS23.237", instead of the "SRVCC".

The characteristics of the present embodiment as described above may be expressed as follows.

A first characteristic of the present embodiment is summarized in that a handover method of UE #1 (a mobile station), which performs voice communication and packet communication using a PS bearer (a packet switch bearer) via eNB (a radio access network device of a first communication scheme not supporting circuit switching communication), includes: a step A of transmitting, by MME (a mobile management node accommodating the radio access network device of the first communication scheme), "Reloc/HO Req (a resource ensuring signal for a circuit switch bearer for requesting to ensure a resource of a circuit switch bearer used in the voice communication)" to RNC/BSS (a radio access network device of a second communication scheme) via MSC (a circuit switch of the second communication scheme supporting the circuit switching communication), the "Reloc/HO Req" including "PS/CS HO Indication (first instruction information indicating that handover is performed for the voice communication and the packet communication)"; a step B of transmitting, by the MME, "Reloc/HO Req (a resource ensuring signal for a packet switch bearer for requesting to ensure a resource of a packet switch bearer used in the packet communication)" including the "PS/CS HO Indication" to the RNC/BSS via SGSN; a step C of transmitting, by the RNC/BSS, "PS to CS Resp (a response signal for the circuit switch bearer indicating that the resource of the circuit switch bearer has been ensured)" and "Forward Reloc Resp (a response signal for the packet switch bearer indicating that the resource of the packet switch bearer has been ensured)" to the MME after both the "Reloc/HO Req (for the CS bearer)" and the "Reloc/HO Req (for the PS bearer)" are received; and a step D of transmitting, by the MME, "HO from EUTRAN command (a handover instruction signal)" from E-UTRAN (the radio access network of the first communication scheme) to UTRAN/GERAN (the radio access network of the second communication scheme) for the voice communication and the packet communication to the UE #1 via the eNB when the "Forward Reloc Resp" and the "PS to CS Resp" are received.

In the first characteristic of the present embodiment, in the step C, when the "Reloc/HO Req (for the PS bearer)" is not received until a predetermined period has elapsed after the "Reloc/HO Req (for the CS bearer)" including the "PS/CS HO Indication" is received, the RNC/BSS transmits the "PS to CS Resp" including "Prepared CS only (second instruction information indicating that handover is performed for only voice communication)", and in the step D, when the "PS to CS Resp" including the "Prepared CS only" is received, the MME may transmit the "HO from EUTRAN command" from the E-UTRAN to the UTRAN/GERAN for only the voice communication.

A second characteristic of the present embodiment is summarized in that a handover method of UE #1, which performs voice communication and packet communication using a PS bearer via eNB, includes: a step A of transmitting, by MME, "Reloc/HO Req (for a CS bearer)" to RNC/BSS via MSC; a step B of transmitting, by the RNC/BSS, "PS to CS Resp" including "CS only Indication (instruction information indicating that handover is performed for only the voice communication)" to the MME without waiting for the reception of "Reloc/HO Req (for the PS bearer)" when the "CS only Indication" is included in the "Reloc/HO Req (for the CS bearer)"; and a step C of transmitting, by MME, "HO from EUTRAN command" from E-UTRAN to UTRAN/GERAN for only the voice communication to the UE #1 via the eNB when the "PS to CS Resp" including "Prepared CS only" is received.

In the second characteristic of the present embodiment, in the step A, even though "SRVCC HO Indication = PS and CS (handover is performed for the voice communication and the packet communication)" is instructed by "Handover Required (a handover request signal)" transmitted by the eNB, if it is determined that the handover is not performed for the packet communication, the MME may transmit the "Reloc/HO Req (for the CS bearer)" including the "CS only Indication".

A third characteristic of the present embodiment is summarized in that a handover method of UE #1, which performs voice communication and packet communication using a PS bearer via eNB, includes: a step of transmitting, by MME, "Reloc/HO Req (for a CS bearer)" including "PS/CS HO Indication" to RNC/BSS via MSC; a step of transmitting, by the MME, "Reloc/HO Req (for a PS bearer)" including the "PS/CS HO Indication" to the RNC/BSS via SGSN; a step of transmitting, by the SGSN, "Forward Reloc Resp" including error response to the MME without transmitting the "Reloc/HO Req (for the PS bearer)" to the RNC/BSS when rejecting establishment of the PS bearer used in the packet communication; a step of performing, by the MME, a cancellation process for ensuring a resource of the CS bearer and the PS bearer when the "Forward Reloc Resp" including the error response is received; a step of transmitting, by the MME, the "Reloc/HO Req (for the CS bearer)" including "CS only Indication" to the RNC/BSS via the MSC; a step of transmitting, by the RNC/BSS, "PS to CS Resp" including "Prepared CS only" to the MME without waiting for the reception of the "Reloc/HO Req (for the PS bearer)" when the "Reloc/HO Req (for the CS bearer)" including the "CS only Indication" is received; and a step of transmitting, by the MME, "HO from EUTRAN command" from E-UTRAN to UTRAN/GERAN for only the voice communication to the UE #1 via the eNB when the "PS to CS Resp" including "Prepared CS only" is received.

A fourth characteristic of the present embodiment is summarized in that a handover method of UE #1, which performs voice communication and packet communication using a PS bearer via eNB, includes: a step of transmitting, by MME, "Reloc/HO Req (for a CS bearer)" including "PS/CS HO Indication" to RNC/BSS via MSC; a step of transmitting, by the MME, "Reloc/HO Req (for the PS bearer)" including the "PS/CS HO Indication" to the RNC/BSS via SGSN; a step of performing, by the MME, a cancellation process for ensuring a resource of the CS bearer and the PS bearer when "Forward Reloc Resp" is not received until a predetermined period has elapsed after the "Reloc/HO Req (for the PS bearer)" is transmitted; a step of transmitting, by the MME, the "Reloc/HO Req (for the CS bearer)" including "CS only Indication" to the RNC/BSS via the MSC; a step of transmitting, by the RNC/BSS, "PS to CS Resp" including "Prepared CS only" to the MME without waiting for the reception of the "Reloc/HO Req (for the PS bearer)" when the "Reloc/HO Req (for the CS bearer)" including the "CS only Indication" is received; and a step of transmitting, by the MME, "HO from EUTRAN command" from E-UTRAN to UTRAN/GERAN for only the voice communication to the UE #1 via the eNB when the "PS to CS Resp" including "Prepared CS only" is received.

A fifth characteristic of the present embodiment is summarized in that RNC/BSS in a mobile communication system, which is able to perform handover of UE #1 performing voice communication and packet communication using a PS bearer via eNB, is configured to receive "Reloc/HO Req (for a CS bearer)" from MME via MSC, to receive "Reloc/HO Req (for the PS bearer)" from the MME via SGSN, and to transmit "PS to CS Resp" and "Forward Reloc Resp" to the MME after both the "Reloc/HO Req (for the CS bearer)" and the "Reloc/HO Req (for the PS bearer)" are received when "PS/CS HO Indication" is included in the received "Reloc/HO Req (for the CS bearer)" or "Reloc/HO Req (for the PS bearer)".

In the fifth characteristic of the present embodiment, when the "PS/CS HO Indication" is included in the received "Reloc/HO Req (for the CS bearer)" and the "Reloc/HO Req (for the PS bearer)" is not received until a predetermined period has elapsed after the "Reloc/HO Req (for the CS bearer)" is received, the RNC/BSS may be configured to transmit the "PS to CS Resp" including "Prepared CS only".

A sixth characteristic of the present embodiment is summarized in that RNC/BSS in a mobile communication system, which is able to perform handover of UE #1 performing voice communication and packet communication using a PS bearer via eNB, is configured to receive "Reloc/HO Req (for a CS bearer)" from MME via MSC, and to transmit "PS to CS Resp" including "Prepared CS only" to the MME without waiting for the reception of "Reloc/HO Req (for the PS bearer)" when "CS only Indication" is included in the received "Reloc/HO Req (for the CS bearer)".

A seventh characteristic of the present embodiment is summarized in that MME in a mobile communication system, which is able to perform handover of UE #1 performing voice communication and packet communication using a PS bearer via eNB, is configured to transmit "Reloc/HO Req (for a CS bearer)" including "CS only Indication" when it is determined that handover is not performed for the packet communication even though "SRVCC HO Indication = PS and CS" is instructed by "Handover Required" transmitted by the eNB.

An eighth characteristic of the present embodiment is summarized in that MME in a mobile communication system, which is able to perform handover of UE #1 performing voice communication and packet communication using a PS bearer via eNB, is configured to transmit "Reloc/HO Req (for a CS bearer)" including "PS/CS HO Indication" to RNC/BSS via MCS, to transmit "Reloc/HO Req (for the PS bearer)" including the "PS/CS HO Indication" to RNC/BSS via SGSN; and to perform a cancellation process for ensuring a resource of the CS bearer and the PS bearer and to transmit the "Reloc/HO Req (for the CS bearer)" including "CS only Indication" to the RNC/BSS via the MCS when "Forward Reloc Resp" including error response is received from the SGSN.

A ninth characteristic of the present embodiment is summarized in that MME in a mobile communication system, which is able to perform handover of UE #1 performing voice communication and packet communication using a PS bearer via eNB, is configured to transmit "Reloc/HO Req (for a CS bearer)" including "PS/CS HO Indication" to RNC/BSS via MCS, to transmit "Reloc/HO Req (for the PS bearer)" including the "PS/CS HO Indication" to RNC/BSS via SGSN; and to perform a cancellation process for ensuring a resource of the CS bearer and the PS bearer and to transmit the "Reloc/HO Req (for the CS bearer)" including "CS only Indication" to the RNC/BSS via the MCS when "Forward Reloc Resp" is not received until a predetermined period has elapsed after the "Reloc/HO Req (for the PS bearer)" is transmitted.

A tenth characteristic of the present embodiment is summarized in that SGSN in a mobile communication system, which is able to perform handover of UE #1 performing voice communication (VoIP communication) and packet communication using a PS bearer via RNC, is configured to transmit "Reloc/HO Req (for a CS bearer)" including "CS only Indication" when it is determined that handover is not performed for the packet communication even though "SRVCC HO Indication = PS and CS" is instructed by "Handover Required" transmitted by the eNB.

Note that the operations of the UE #1, the UE #2, the UTRAN/GERAN (RNC/BSS), the MSC, the MSC server, the CS-MGW, the SGSN, the E-UTRAN (eNB), the MME, the S-GW, the P-GW, the P-CSCF, the I/S-CSCF, the SCC AS, and the PCRF may be performed by hardware, a software module performed by a processor, or a combination thereof.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the UE #1, the UE #2, the UTRAN/GERAN (RNC/BSS), the MSC, the MSC server, the CS-MGW, the SGSN, the E-UTRAN (eNB), the MME, the S-GW, the P-GW, the P-CSCF, the I/S-CSCF, the SCC AS, and the PCRF. Furthermore, such a storage medium and processor may be arranged, as a discrete component, in the UE #1, the UE #2, the UTRAN/GERAN (RNC/BSS), the MSC, the MSC server, the CS-MGW, the SGSN, the E-UTRAN (eNB), the MME, the S-GW, the P-GW, the P-CSCF, the I/S-CSCF, the SCC AS, and the PCRF.

Thus, the present invention has been explained in detail by using the above-mentioned embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

### [Reference Signs List]

UE #1, UE #2 ... mobile station
E-UTRAN, UTRAN/GERAN ... radio access network
RNC, NodeB, BSS, eNB ... radio access network device
MSC ... circuit switch
SGSN ... packet switch
S-GW, P-GW ... gateway device
MME ... mobile management node

## Claims

1. A handover method of a mobile station that performs voice communication and packet communication by using a packet switch bearer via a radio access network device of a first communication scheme not supporting circuit switching communication, comprising:
a step A of transmitting, by a mobile management node accommodating the radio access network device of the first communication scheme, a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for voice communication and packet communication;
a step B of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step C of transmitting, by the radio access network device of the second communication scheme, a response signal for the circuit switch bearer indicating that the resource of the circuit switch bearer has been ensured and a response signal for the packet switch bearer indicating that the resource of the packet switch bearer has been ensured to the mobile management node after both the resource ensuring signal for the circuit switch bearer and the resource ensuring signal for the packet switch bearer are received; and
a step D of transmitting, by the mobile management node, a handover instruction signal from the radio access network of the first communication scheme to the radio access network of the second communication scheme for the voice communication and the packet communication to the mobile station via the radio access network device of the first communication scheme when the response signal for the circuit switch bearer and the response signal for the packet switch bearer are received.

2. The handover method according to claim 1, wherein,
in the step C, when the resource ensuring signal for the packet switch bearer is not received until a predetermined period has elapsed after the resource ensuring signal for the circuit switch bearer including the first instruction information is received, the radio access network device of the second communication scheme transmits the response signal for the circuit switch bearer including second instruction information indicating that handover is performed for only the voice communication, and
in the step D, when the response signal for the circuit switch bearer including the second instruction information is received, the mobile management node transmits the handover instruction signal from the radio access network device of the first communication scheme to the radio access network device of the second communication scheme for only the voice communication.

3. A handover method of a mobile station that performs voice communication and packet communication by using a packet switch bearer via a radio access network device of a first communication scheme not supporting circuit switching communication, comprising:
a step A of transmitting, by a mobile management node accommodating the radio access network device of the first communication scheme, a resource ensuring signal for a circuit switch bearer for requesting to ensure a resource of a circuit switch bearer used in the voice communication to a radio access network device of a second communication scheme via a circuit switch of the second communication scheme supporting the circuit switching communication;
a step B of transmitting, by the radio access network device of the second communication scheme, a response signal for the circuit switch bearer including instruction information and indicating that the resource of the circuit switch bearer has been ensured to the mobile management node without waiting for reception of a resource ensuring signal for a packet switch bearer for requesting to ensure a resource of a packet switch bearer used in the packet communication when instruction information indicating that handover is performed for only the voice communication is included in the resource ensuring signal for the circuit switch bearer; and
a step C of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the instruction information is received.

4. The handover method according to claim 3, wherein, in the step A, even though performing handover for the voice communication and the packet communication is instructed by a handover request signal transmitted by the radio access network device of the first communication scheme, when it is determined that the handover is not performed for the packet communication, the mobile management node transmits the resource ensuring signal for the circuit switch bearer including the instruction information.

5. A handover method of a mobile station that performs voice communication and packet communication by using a packet switch bearer via a radio access network device of a first communication scheme not supporting circuit switching communication, comprising:
a step of transmitting, by a mobile management node accommodating the radio access network device of the first communication scheme, a resource ensuring signal for a circuit switch bearer for requesting to ensure a resource of a circuit switch bearer used in voice communication to a radio access network device of a second communication scheme via a circuit switch of the second communication scheme supporting the circuit switching communication, the resource ensuring signal including first instruction information indicating that handover is performed for the voice communication and the packet communication;
a step of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step of transmitting, by the packet switch of the second communication scheme, a response signal for the packet switch bearer including error response to the mobile management node without transmitting the resource ensuring signal for the packet switch bearer to the radio access network device of the second communication scheme when rejecting establishment of the packet switch bearer used in the packet communication;
a step of performing, by the mobile management node, a cancellation process for ensuring a resource of the circuit switch bearer and the packet switch bearer when the response signal for the packet switch bearer including the error response is received;
a step of transmitting, by the mobile management node, the resource ensuring signal for the circuit switch bearer to the radio access network device of the second communication scheme via the circuit switch of the second communication scheme, the resource ensuring signal including second instruction information indicating that handover is performed for only the voice communication;
a step of transmitting, by the radio access network device of the second communication scheme, a response signal for the circuit switch bearer indicating that the resource of the circuit switch bearer has been ensured to the mobile management node without waiting for reception of the resource ensuring signal for the packet switch bearer when the resource ensuring signal for the circuit switch bearer including the second instruction information is received; and
a step of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the second instruction information is received.

6. A handover method of a mobile station that performs voice communication and packet communication by using a packet switch bearer via a radio access network device of a first communication scheme not supporting circuit switching communication, comprising:
a step of transmitting, by a mobile management node accommodating the radio access network device of the first communication scheme, a resource ensuring signal for a circuit switch bearer for requesting to ensure a resource of a circuit switch bearer used in voice communication to a radio access network device of a second communication scheme via a circuit switch of the second communication scheme supporting the circuit switching communication, the resource ensuring signal including first instruction information indicating that handover is performed for the voice communication and the packet communication;
a step of transmitting, by the mobile management node, a resource ensuring signal for a packet switch bearer for requesting to ensure a resource of a packet switch bearer used in the packet communication to the radio access network device of the second communication scheme via a packet switch of the second communication scheme, the resource ensuring signal including the first instruction information;
a step of performing, by the mobile management node, a cancellation process for ensuring a resource of the circuit switch bearer and the packet switch bearer when a response signal for the packet switch bearer indicating that the resource of the packet switch bearer has been ensured is not received until a predetermined period has elapsed after the resource ensuring signal for the packet switch bearer is transmitted;
a step of transmitting, by the mobile management node, the resource ensuring signal for the circuit switch bearer to the radio access network device of the second communication scheme via the circuit switch of the second communication scheme, the resource ensuring signal including second instruction information indicating that handover is performed for only the voice communication;
a step of transmitting, by the radio access network device of the second communication scheme, a response signal for the circuit switch bearer including the second instruction information and indicating that the resource of the circuit switch bearer has been ensured to the mobile management node without waiting for reception of the resource ensuring signal for the packet switch bearer when the resource ensuring signal for the circuit switch bearer including the second instruction information is received; and
a step of transmitting, by the mobile management node, a handover instruction signal from the radio access network device of the first communication scheme to the radio access network device of the second communication scheme for only the voice communication to the mobile station via the radio access network device of the first communication scheme when the response signal for the circuit switch bearer including the second instruction information is received.

7. A radio access network device of a second communication scheme, which supports circuit switching communication in a mobile communication system that performs handover of a mobile station performing voice communication and packet communication by using a packet switch bearer via a radio access network device of a first communication scheme not supporting the circuit switching communication, wherein the radio access network device of the second communication scheme
receives a resource ensuing signal for a circuit switch bearer for requesting to ensure a resource of a circuit switch bearer used in the voice communication from a mobile management node accommodating the radio access network device of the first communication scheme via a circuit switch of the second communication scheme supporting the circuit switching communication,
receives a resource ensuing signal for a packet switch bearer for requesting to ensure a resource of a packet switch bearer used in the packet communication from the mobile management node via the circuit switch of the second communication scheme, and
transmits, to the mobile management node, a response signal for the circuit switch bearer indicating that the resource of the circuit switch bearer has been ensured and a response signal for the packet switch bearer indicating that the resource of the packet switch bearer has been ensured after both the resource ensuing signal for the circuit switch bearer and the resource ensuing signal for the packet switch bearer are received when first instruction information indicating that handover is performed for the voice communication and the packet communication is included in the received response signal for the circuit switch bearer or response signal for the packet switch bearer.

8. The radio access network device according to claim 7, wherein, when the first instruction information is included in the received resource ensuing signal for the circuit switch bearer and the resource ensuing signal for the packet switch bearer is not received until a predetermined period has elapsed after the resource ensuing signal for the circuit switch bearer is received, the radio access network device of the second communication scheme transmits the response signal for the circuit switch bearer including second instruction information indicating that handover is performed for only the voice communication.

9. A radio access network device of a second communication scheme, which supports circuit switching communication in a mobile communication system that performs handover of a mobile station performing voice communication and packet communication by using a packet switch bearer via a radio access network device of a first communication scheme not supporting the circuit switching communication, wherein the radio access network device of the second communication scheme
receives a resource ensuing signal for a circuit switch bearer for requesting to ensure a resource of a circuit switch bearer used in the voice communication from a mobile management node accommodating the radio access network device of the first communication scheme via a circuit switch of the second communication scheme supporting the circuit switching communication,
transmits, to the mobile management node, a response signal for the circuit switch bearer including instruction information and indicating that the resource of the circuit switch bearer has been ensured without waiting for reception of a resource ensuing signal for the packet switch bearer for requesting to ensure a resource of the packet switch bearer used in the packet communication when the instruction information indicating that handover is performed for only the voice communication is included in the received resource ensuing signal for the circuit switch bearer.

10. A mobile management node that accommodates a radio access network device of a communication scheme in a mobile communication system that performs handover of a mobile station performing voice communication and packet communication by using a packet switch bearer via the radio access network device of the communication scheme not supporting circuit switching communication, wherein the mobile management node
transmits a resource ensuring signal for a circuit switch bearer for requesting to ensure a resource of the circuit switch bearer used in the voice communication when it is determined that handover is not performed for the packet communication even though performing handover for the voice communication and the packet communication is instructed by a handover request signal transmitted by the radio access network device, the resource ensuring signal including instruction information indicating that handover is performed for only the voice communication.

11. A mobile management node that accommodates a radio access network device of a first communication scheme in a mobile communication system that performs handover of a mobile station performing voice communication and packet communication by using a packet switch bearer via the radio access network device of the first communication scheme not supporting circuit switching communication, wherein the mobile management node
transmits a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for the voice communication and the packet communication,
transmits a resource ensuring signal for a packet switch bearer for requesting to ensure a resource of a packet switch bearer used in the packet communication to the radio access network device of the second communication scheme via the circuit switch of the second communication scheme, the resource ensuring signal including the first instruction information, and
performs a cancellation process for ensuring a resource of the circuit switch bearer and the packet switch bearer and transmits the resource ensuring signal for the circuit switch bearer to the radio access network device of the second communication scheme via the circuit switch of the second communication scheme when a response signal for the packet switch bearer is received from the packet switch of the second communication scheme, the resource ensuring signal including second instruction information indicating that handover is performed for only the voice communication, the response signal including error response and indicating that the resource of the packet switch bearer has been ensured.

12. A mobile management node that accommodates a radio access network device of a first communication scheme in a mobile communication system that performs handover of a mobile station performing voice communication and packet communication by using a packet switch bearer via the radio access network device of the first communication scheme not supporting circuit switching communication, wherein the mobile management node
transmits a resource ensuring signal for a circuit switch bearer for requesting to ensure a resource of a circuit switch bearer used in the voice communication to a radio access network device of a second communication scheme via a circuit switch of the second communication scheme supporting the circuit switching communication, the resource ensuring signal including first instruction information indicating that handover is performed for the voice communication and the packet communication,
transmits a resource ensuring signal for a packet switch bearer for requesting to ensure a resource of a packet switch bearer used in the packet communication to the radio access network device of the second communication scheme via the packet switch of the second communication scheme, the resource ensuring signal including the first instruction information, and
performs a cancellation process for ensuring a resource of the circuit switch bearer and the packet switch bearer and transmits the resource ensuring signal for the circuit switch bearer to the radio access network device of the second communication scheme via the circuit switch of the second communication scheme when a response signal for the packet switch bearer is not received until a predetermined period has elapsed after the resource ensuring signal for the packet switch bearer is transmitted, the resource ensuring signal including second instruction information indicating that handover is performed for only the voice communication, the response signal indicating that the resource of the packet switch bearer has been ensured.

13. A packet switch, which accommodates a radio access network device of a communication scheme in a mobile communication system that performs handover of a mobile station performing voice communication and packet communication by using a packet switch bearer via the radio access network device of the communication scheme supporting circuit switching communication, wherein the mobile management node
transmits a resource ensuring signal for a circuit switch bearer for requesting to ensure a resource of the circuit switch bearer used in the voice communication when it is determined that handover is not performed for the packet communication even though performing handover for the voice communication and the packet communication is instructed by a handover request signal transmitted by the radio access network device, the resource ensuring signal including instruction information indicating that handover is performed for only the voice communication.
